# EUROPEAN PATENT APPLICATION

(11) **EP 4 775 321 A1**
(43) Date of publication of application: **15.07.2026**
(21) Application number: 24862856.2
(22) Date of filing: 05.09.2024
(51) Int. Cl.: B09B 5/00, B07B 1/22, B07B 1/28, B07B 13/08, B09B 3/35

(54) **SEPARATION SYSTEM, SEPARATION METHOD, AND CONTROL PROGRAM**

(30) Priority: 08.09.2023 JP 2023146507
(71) Applicant: TOYOTA JIDOSHA KABUSHIKI KAISHA, Toyota-Shi, Aichi-Ken 471-8571 (JP)
(72) Inventor: NISHIMURA, Keisuke, Handa-shi, Aichi 475-0033 (JP)
(74) Representative: J A Kemp LLP
(86) International application number: PCT/JP2024/031823
(87) International publication number: WO 2025/053204

(57) **Abstract**

A sorting system according to the present disclosure is a sorting system configured to sort an automobile shredder residue (ASR) collected from a shredded material generated by shredding a vehicle, the sorting system including a first sieve configured to sort the ASR into a first ASR that is the ASR having a particle size less than a first particle size and a second ASR that is the ASR having a particle size equal to or larger than the first particle size, a first dry specific gravity separating apparatus configured to perform a dry specific gravity separation on the first ASR to collect glass, and a sorting apparatus configured to sort the first ASR from which the glass has been collected and the second ASR into at least metal and an organic component.

## Description

### Technical Field

The present disclosure relates to a sorting system, a sorting method, and a control program for sorting an automobile shredder residue (ASR) collected from a shredded material generated by shredding a vehicle.

### Background Art

In recent years, recycling of the ASR has been promoted. Therefore, it is required not only to sort the shredded material generated by shredding the vehicle into the useful metal and the ASR containing an organic component such as cured plastic, but also to further finely sort and collect the ASR.

For example, Patent Literature 1 discloses a method of treating a mixture of fragmented materials including a small amount of recyclable used polymer materials in the field of plastics technology and contaminants, resulting from the shredding of durable consumer goods at the end of their service life.

### Citation List

### Patent Literature

Patent Literature 1:Published Japanese Translation of PCT International Publication for Patent Application, No. 2013-535359

### Summary of Invention

Subsequently, it is required not only to sort the shredded material generated by shredding the vehicle into the useful metal and the ASR containing an organic component such as cured plastic, but also to further finely sort and collect the ASR.

The present disclosure has been made in view of the above background, and an object thereof is to provide a sorting system, a sorting method, and a control program capable of finely sorting and collecting an ASR collected from a shredded material generated by shredding a vehicle.

A sorting system according to the present disclosure is a sorting system configured to sort an automobile shredder residue (ASR) collected from a shredded material generated by shredding a vehicle, the sorting system including a first sieve configured to sort the ASR into a first ASR that is the ASR having a particle size less than a first particle size and a second ASR that is the ASR having a particle size equal to or larger than the first particle size, a first dry specific gravity separating apparatus configured to perform a dry specific gravity separation on the first ASR to collect glass, and a sorting apparatus configured to sort the first ASR from which the glass has been collected and the second ASR into at least metal and an organic component. Thereby, the sorting system can finely sort and collect the ASR collected from the shredded material generated by shredding the vehicle. In addition, this sorting system can prevent failure of the sorting apparatus due to glass by performing a sorting process on the ASR collected from the shredded material after removing the glass using a sieve.

The first sieve may have a plurality of slits. The width of the slit of the first sieve may be 10 mm or less. Accordingly, this sorting system can collect glass with higher accuracy.

The sorting system may further include a second sieve configured to sort the first ASRs into two types of particle sizes, and the first dry specific gravity separating apparatus may be configured to perform a dry specific gravity separation on a first ASR having a smaller particle size of the first ASRs having the two types of particle sizes, the first ASRs being sorted by the second sieve. Thereby, the sorting system can more finely sort and collect the ASR.

A sorting method according to the present disclosure is a sorting method performed by a sorting system configured to sort an automobile shredder residue (ASR) collected from a shredded material generated by shredding a vehicle, the method including : sorting, using a first sieve, the ASR into a first ASR that is the ASR having a particle size less than a first particle size, and a second ASR that is the ASR having a particle size equal to or larger than the first particle size; collecting glass by performing a dry specific gravity separation on the first ASR; and sorting the first ASR from which the glass has been collected and the second ASR into at least metals and organic components. Thereby, this sorting method can finely sort and collect the ASR collected from the shredded material generated by shredding the vehicle. In addition, this sorting method can prevent failure of the sorting apparatus due to glass by performing a sorting process on the ASR collected from the shredded material after removing the glass using a sieve.

Furthermore, a control program according to the present disclosure is a control program for causing a computer to execute a sorting process in a sorting system configured to sort an automobile shredder residue (ASR) collected from a shredded material generated by shredding a vehicle, the control program causing the computer to execute the steps of sorting, using a first sieve, the ASR into a first ASR that is the ASR having a particle size less than a first particle size, and a second ASR that is the ASR having a particle size equal to or larger than the first particle size, performing a dry specific gravity separation on the first ASR to collect glass, and sorting the first ASR from which the glass has been collected and the second ASR into at least metal and an organic component. As a result, the control program can finely sort and collect the ASR collected from the shredded material generated by shredding the vehicle. In addition, this control program can prevent failure of the sorting apparatus due to glass by performing a sorting process on the ASR collected from the shredded material after removing the glass using a sieve.

According to the present disclosure, it is possible to provide a sorting system, a sorting method, and a control program capable of finely sorting and collecting the ASR collected from a shredded material generated by shredding a vehicle.

### Brief Description of Drawings

Fig. 1 is a schematic view illustrating an example of an ASR collection system in a sorting system according to the present disclosure;
Fig. 2 is a block diagram illustrating a configuration example of a control apparatus provided in the ASR collection system according to the present disclosure;
Fig. 3 is a block diagram illustrating a configuration example of the early process of an ASR sorting system in the sorting system according to the present disclosure;
Fig. 4 is a schematic perspective view illustrating an example of a sieve provided in the ASR sorting system according to the present disclosure;
Fig. 5 is a schematic top view of the sieve illustrated in Fig. 4;
Fig. 6 is a schematic view illustrating another example of a sieve provided in the ASR sorting system according to the present disclosure;
Fig. 7 is a block diagram illustrating a configuration example of the intermediate process of the ASR sorting system according to the present disclosure;
Fig. 8 is a schematic view illustrating an example of a separating machine using a sieve provided in the ASR sorting system according to the present disclosure;
Fig. 9 is a schematic view illustrating an example of a sieve provided in the ASR sorting system according to the present disclosure;
Fig. 10 is a block diagram illustrating a configuration example of the late process of the ASR sorting system according to the present disclosure;
Fig. 11 is a schematic view illustrating an example of an optical separating machine provided in the ASR sorting system according to the present disclosure;
Fig. 12 is a schematic view illustrating an example of an optical separating machine provided in the ASR sorting system according to the present disclosure;
Fig. 13 is a schematic cross-sectional view illustrating an example of a wet sink-float separating machine provided in the ASR sorting system according to the present disclosure;
Fig. 14 is a schematic perspective view illustrating an appearance of the wet sink-float separating machine illustrated in Fig. 13;
Fig. 15 is a schematic cross-sectional view illustrating a first modified example of the wet sink-float separating machine provided in the ASR sorting system according to the present disclosure; and
Fig. 16 is a schematic cross-sectional view illustrating a second modified example of the wet sink-float separating machine provided in the ASR sorting system according to the present disclosure.

### Description of Embodiments

Hereinafter, specific embodiments to which the present invention is applied will be described in detail with reference to the drawings. However, the present invention is not limited to the following embodiments. In order to clarify the description, the following description and drawings are simplified as appropriate.

### <Sorting system according to present disclosure>

Until now, since the ASR has been mainly used for forming cement, fine sorting of the ASR has not been performed. However, in recent years, there is an increasing demand for reuse of the ASR in various fields, and accordingly, there is an increasing need for efficient collection of the ASR and highly accurate sorting of the ASR. Therefore, the sorting system according to the present disclosure efficiently collects the ASR using an ASR collection system 10, and performs highly accurate sorting of the ASR using an ASR sorting system 20.

### <Description of ASR collection system 10>

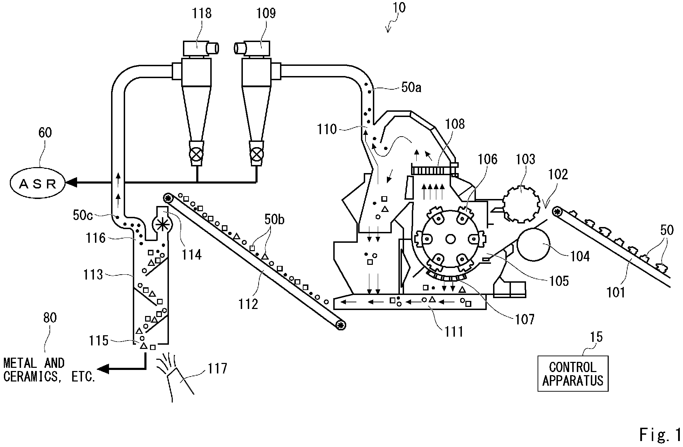

Fig. 1 is a schematic view illustrating an example of the ASR collection system 10 in a sorting system according to the present disclosure. The ASR collection system 10 is a system configured to sort and collect a shredded material generated by shredding a vehicle to be discarded into the useful metal and the ASR containing an organic component such as cured plastic. Here, the ASR collection system 10 can improve the content of organic components in the ASR to (for example, 70% or more) by adjusting the suction force of the suction apparatus configured to suck the shredded material and the wind force of the blower configured to blow up the shredded material. In other words, the ASR collection system 10 can accurately sort and collect the shredded material generated by shredding the vehicle. Hereinafter, a specific description will be given.

In the sorting system according to the present disclosure, first, main components such as an engine, a transmission, a catalyst, a tire, a battery, oil, fuel, a CFC gas, and an airbag are removed from a vehicle to be scrapped. The vehicle from which the main components have been removed is pressed and then shredded to a predetermined size S1 or less by a pre-shredder (not illustrated). A shredded material 50 having the predetermined size S1 or less is conveyed by a belt conveyor 101, and is fed into a feeding port 102 of the ASR collection system 10. The shredded material 50 fed into the feeding port 102 is fed into a shredding chamber 105 with an upper feed roller 103 and a lower feed roller 104 interposed therebetween. In the shredding chamber 105, the shredded material 50 is further finely shredded by a hammer 106 attached to the outer periphery of the rotating rotor.

A sieve 108 through which a shredded material having a predetermined size S2 or less, the predetermined size S2 being smaller than the predetermined size S1, passes is attached to an upper part of the shredding chamber 105. Further, a sieve 107 through which a shredded material having a predetermined size S3 or less, the predetermined size S3 being smaller than the predetermined size S1, passes is attached to a lower portion of the shredding chamber 105. The predetermined sizes S2 and S3 are determined according to the specification, and may be the same or different.

Of the sieves 107 and 108, only the sieve 108 may be provided, and the sieve 107 may not be provided. That is, the discharge path of the shredded material from the shredding chamber 105 may be only the path through the sieve 108. However, by providing the sieve 107, the number of the discharge paths of the shredded material from the shredding chamber 105 increases and the discharge efficiency improves, so that the shredding treatment ability of the shredded material 50 in the shredding chamber 105 increases.

A first suction apparatus 109 sucks the shredded material 50 finely shredded by the hammer 106 in the shredding chamber 105 from a suction port 110 provided above the sieve 108 with the sieve 108 interposed therebetween. Then, the first suction apparatus 109 collects the shredded material that has passed through the sieve 108 among the shredded materials 50 in the shredding chamber 105 as a shredded residue (first shredded residue) 50a.

A tray 111 is disposed below the sieve 107. The tray 111 receives, as a shredded material 50b, the shredded material that has passed through the sieve 107 among the shredded materials 50, in the shredding chamber 105, that have not been collected by the first suction apparatus 109. The tray 111 receives, as the shredded material 50b, the shredded material sucked by the first suction apparatus 109 and passing through the sieve 108 but fallen due to a heavy weight before reaching the suction port 110. The shredded material 50b received by the tray 111 is conveyed by a belt conveyor 112 and fed into the feeding port 114 provided at the upper part of a sorting chamber 113.

The sorting chamber 113 is a cylindrical conveyance path for conveying the shredded material 50b from the feeding port 114 provided at the upper part to a discharge port 115 provided at the lower part. Here, the sorting chamber 113 has a discharge port 116 at the upper part separately from the discharge port 115 provided at the lower part of the sorting chamber 113. The discharge port 116 is a suction port of a second suction apparatus 118. Therefore, in the following description, the discharge port 116 is referred to as a suction port 116.

A blower 117 is installed below the outside of the sorting chamber 113. The blower 117 blows air from the outside of the sorting chamber 113 to the shredded material 50b in the sorting chamber 113 via the discharge port 115. Note that a lower part of the sorting chamber 113 may separately have a ventilation port through which air from the blower 117 passes. In this case, the blower 117 blows air from the outside of the sorting chamber 113 to the shredded material 50b in the sorting chamber 113 through the ventilation port.

The second suction apparatus 118 sucks, from the suction port 116, the shredded material blown up by the air of the blower 117 out of the shredded materials 50b in the sorting chamber 113, and collects the shredded material as a shredded residue (second shredded residue) 50c. The shredded material not collected by the second suction apparatus 118 among the shredded materials 50b in the sorting chamber 113 is discharged as a collected material 80 from the discharge port 115. The collected material 80 is mainly composed of materials of metal (useful metal), a ceramic, and the like. The collected material 80 may be further finely sorted in a process (not illustrated).

A shredded residue 50a collected by the first suction apparatus 109 and a shredded residue 50c collected by the second suction apparatus 118 are collectively discharged as an ASR 60. The ASR 60 includes an organic component, a nonferrous metal, a harness, glass, iron, paper, wood, and the like. Examples of the organic component include cured plastic (resin), urethane foam, fiber, and rubber. The higher the content of organic components in the ASR 60 (that is, the higher the collection ratio of the organic component from the shredded material 50), the higher the efficiency of recycling the ASR.

The ASR collection system 10 includes a control apparatus 15. The control apparatus 15 drives the ASR collection system 10, and controls the suction force of the first suction apparatus 109, the suction force of the second suction apparatus 118, and the wind force of the blower 117 based on the respective components of the ASR 60 and the collected material 80. Thereby, the control apparatus 15 can increase the content of organic components in the ASR 60.

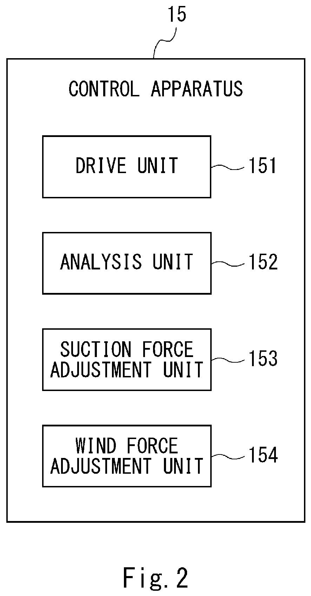

Fig. 2 is a block diagram illustrating a configuration example of the control apparatus 15. As illustrated in Fig. 2, the control apparatus 15 includes a drive unit 151, an analysis unit 152, a suction force adjustment unit 153, and a wind force adjustment unit 154.

The drive unit 151 drives the ASR collection system 10. As a result, the ASR collection system 10 performs an operation of sorting the shredded material 50 into the ASR 60 containing an organic component such as cured plastic and the collected material 80 composed of materials of metal, a ceramic, and the like.

The analysis unit 152 analyzes respective components of the ASR 60 collected by the ASR collection system 10 and the collected material 80 other than the ASR 60 collected by the ASR collection system 10.

The suction force adjustment unit 153 adjusts the suction force of each of the first suction apparatus 109 and the second suction apparatus 118 based on the result of the analysis by the analysis unit 152. The wind force adjustment unit 154 adjusts the wind force of the blower 117 based on the result of the analysis by the analysis unit 152.

For example, in a case where the content of the predetermined metal (metal to be contained in the collected material 80) in the ASR 60 is equal to or greater than a predetermined ratio, the suction force adjustment unit 153 weakens at least one of the first suction apparatus 109 and the second suction apparatus 118. Alternatively, the wind force adjustment unit 154 weakens the wind force of the blower 117. Accordingly, the collection of the predetermined metal by the first suction apparatus 109 and the second suction apparatus 118 is suppressed.

In addition, for example, in a case where the content of the predetermined organic component (component to be contained in the ASR 60) in the collected material 80 is a predetermined ratio or more, the suction force adjustment unit 153 strengthens at least one of the first suction apparatus 109 and the second suction apparatus 118. Alternatively, the wind force adjustment unit 154 increases the wind force of the blower 117. As a result, the collection of the predetermined organic component by the first suction apparatus 109 and the second suction apparatus 118 is promoted.

The manners of adjusting the suction force of each of the first suction apparatus 109 and the second suction apparatus 118 by the suction force adjustment unit 153 and the various manners of adjusting the wind force of the blower 117 by the wind force adjustment unit 154 may vary. The control apparatus 15 can improve the content of organic components in the ASR 60 by finely adjusting the suction force of each of the first suction apparatus 109 and the second suction apparatus 118 and the wind force of the blower 117.

As described above, the ASR collection system according to the present disclosure can improve the content of organic components in the collected ASR (for example, 70% or more) by adjusting the suction force of the suction apparatus configured to suck the shredded material and the wind force of the blower configured to blow up the shredded material. In other words, the ASR collection system according to the present disclosure can accurately sort and collect the shredded material generated by shredding the vehicle.

### <Description of ASR sorting system 20>

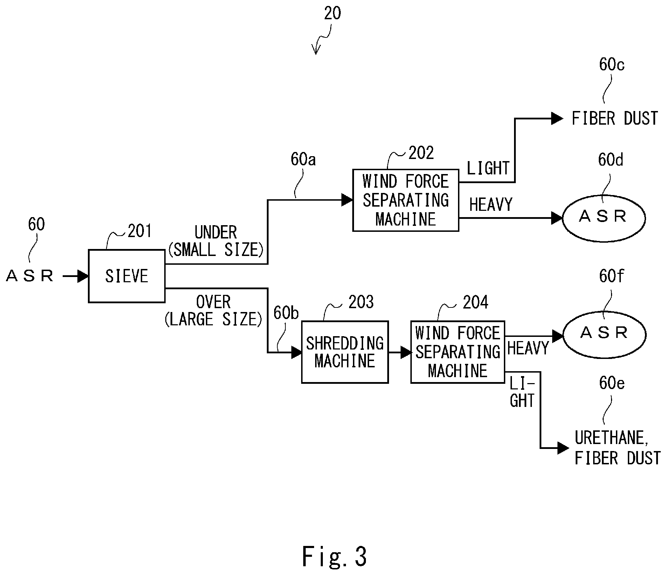

Fig. 3 is a block diagram illustrating a configuration example of the early process of the ASR sorting system 20 in the sorting system according to the present disclosure. The ASR sorting system 20 is a system that finely sorts the ASR 60 collected from the shredded material 50 by the ASR collection system 10.

As illustrated in Fig. 3, the ASR sorting system 20 includes, for the early process, a sieve 201, a wind force separating machine 202, a shredding machine 203, and a wind force separating machine 204.

The sieve 201 sorts the ASR 60 collected from the shredded material 50 in the ASR collection system 10 into an ASR (first ASR) 60a having a particle size less than the first particle size and an ASR (second ASR) 60b having a particle size equal to or larger than the first particle size.

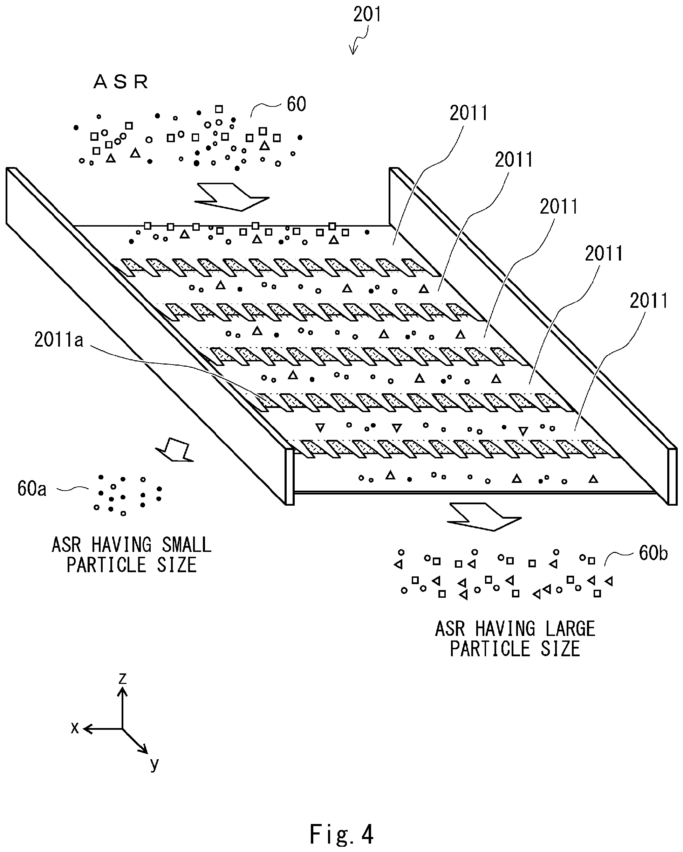

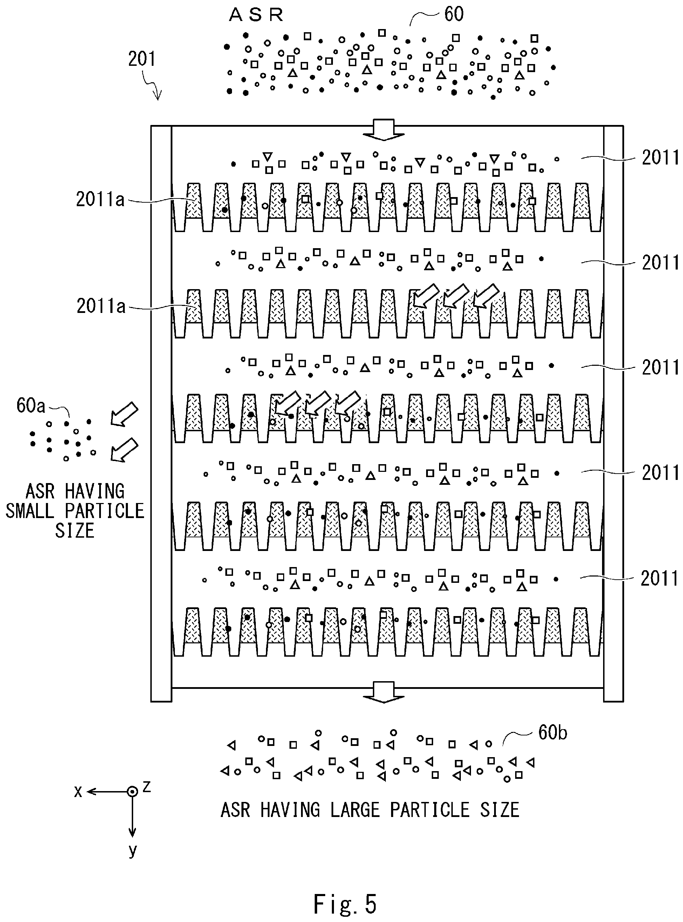

Fig. 4 is a schematic perspective view illustrating an example of the sieve 201. Fig. 5 is a schematic top view of the sieve 201. As illustrated in Figs. 4 and 5, the sieve 201 is configured by disposing a plurality of comb-shaped members 2011 having a plurality of slits 2011a in a stepwise manner. The sieve 201 vibrates to sort the ASR 60 into an ASR 60a that has passed through the slit and an ASR 60b that has not passed through the slit. As an example, the width of the slit is 10 mm, and the length of the slit is 40 mm. Since the length of each slit is as long as 40 mm, a linear object such as a wire harness or a copper wire is hardly clogged in the sieve 201.

Here, glass is generally likely to become fine by shredding. The slit of the sieve 201 is adjusted to a small width (size) so that glass passes therethrough. Therefore, it can also be said that the sieve 201 sorts the ASR 60 into the ASR 60a having a high content of the glass component and the ASR 60b other than the ASR 60a. The case where the width of the slit of the sieve 201 is 10 mm is described as an example, but the present invention is not limited thereto. The width of the slit of the sieve 201 may be any size so that the content of glass in the ASR 60a is high and the content of glass in the ASR 60b is low. Specifically, the width of the slit of the sieve 201 may be greater than 10 mm so that the content of glass in the ASR 60b is substantially 0. In this case, more detailed sorting is performed by the sieve 205 in the subsequent process.

Alternatively, the sieve 201 may be configured so that the width of the slit can be changed. In this case, for example, a control apparatus (not illustrated) may analyze the content of glass in the ASR 60a and the content of glass in the ASR 60b, and adjust the width of the slit of sieve 201 based on the analysis result.

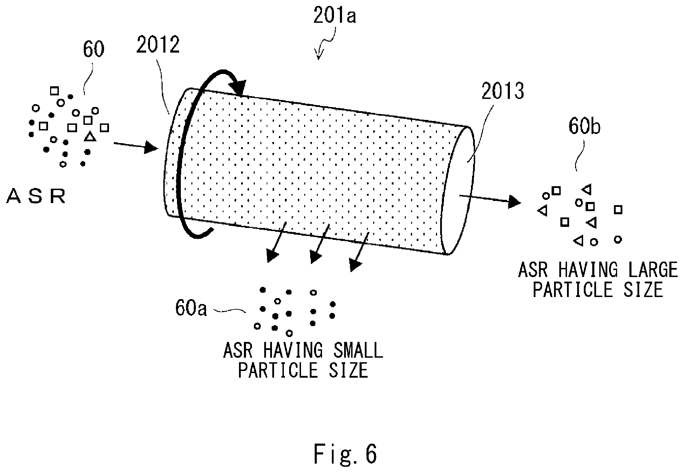

The structure of the sieve 201 is not limited to the structure illustrated in Fig. 4, and the structure can be appropriately changed to a different structure that can sort the ASR 60 into the ASR 60a having a particle size less than the first particle size and the ASR 60b having a particle size equal to or larger than the first particle size. For example, the structure of the sieve 201 may be a structure as illustrated in Fig. 6. Fig. 6 is a schematic view illustrating another example of the sieve 201 as a sieve 201a. As illustrated in Fig. 6, the sieve 201a has a plurality of holes formed in a mesh shape, and has a tubular shape. The tubular sieve 201a rotates to sort the ASR 60 fed into an upper feeding port 2012 into the ASR 60a having passed through the slit and the ASR 60b discharged from a lower discharge port 2013 without passing through the slit.

The wind force separating machine 202 blows air against the ASR 60a having a particle size less than the first particle size to sort the ASR 60a into an ASR 60c of a light material blown up by the air and an ASR 60d other than the ASR 60c. The ASR 60c of a light material blown up by the air is, for example, fiber dust. The fiber dust is solidified and then used as a fuel for an electric furnace or as a reducing agent for a blast furnace.

The shredding machine 203 shreds the ASR 60b having a particle size equal to or larger than the first particle size to, for example, a particle size smaller than the first particle size with a hammer or the like attached to the outer periphery of the rotating rotor. Here, not only shredding but also magnetic separation (sorting by magnetic force), aluminum sorting, and the like may be further performed.

The wind force separating machine 204 blows air against the ASR 60b shredded by the shredding machine 203 to sort the ASR 60b into an ASR 60e of a light material blown up by the air and an ASR 60f other than the ASR 60e. The ASR 60e of a light material blown up by the air is, for example, urethane and fiber dust. Urethane and fiber dust are solidified and then used as a fuel for an electric furnace or as a reducing agent for a blast furnace. After the shredding by the shredding machine 203 and the sorting of the shredded material by the wind force separating machine 204, the pulverizing by a pulverizer (not illustrated) and the sorting of the pulverized material by a separating machine (not illustrated) may be further performed. That is, shredding and sorting of the ASR 60b may be performed in two stages. As a result, the burden on the shredding machine 203 is reduced.

The ASR 60d and the ASR 60f are further sorted in the next process in the ASR sorting system 20.

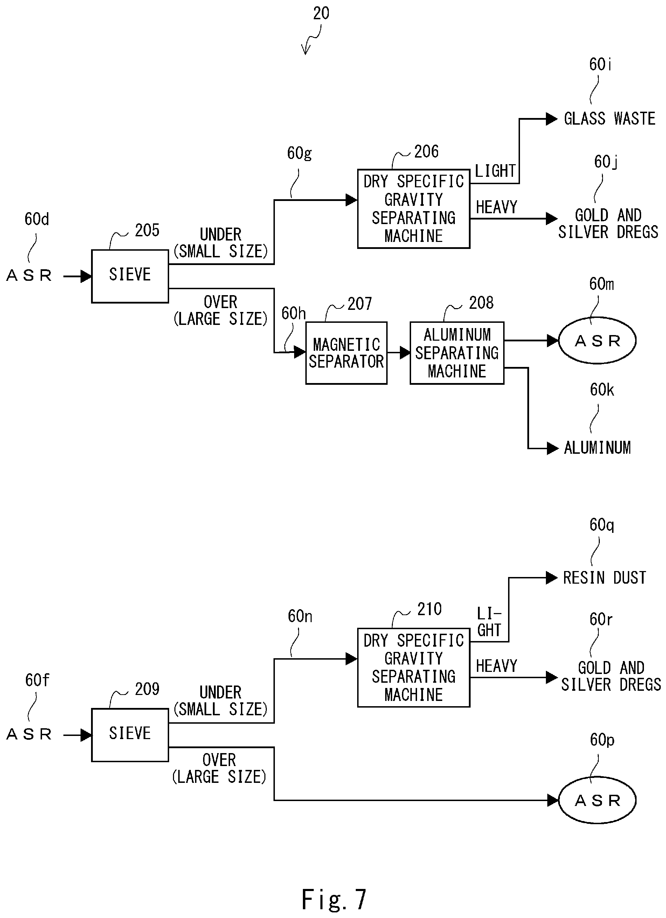

Fig. 7 is a block diagram illustrating a configuration example of the intermediate process of the ASR sorting system 20. As illustrated in Fig. 7, the ASR sorting system 20 includes a sieve 205, a dry specific gravity separating machine 206, a magnetic separator 207, an aluminum separating machine 208, a sieve 209, and a dry specific gravity separating machine 210 for the intermediate process.

The sieve 205 sorts the ASR 60a having a particle size less than the first particle size and having a high glass content into the ASR 60g having a particle size less than the second particle size and the ASR 60h having a particle size equal to or larger than the second particle size. Note that the second particle size and the first particle size are about the same, but the present invention is not limited thereto, and the second particle size and the first particle size may be different from each other to such an extent that the event in which the shredded material is clogged in the subsequent process due to too large a second particle size does not occur or the meaning of sorting by the sieve 205 is not lost.

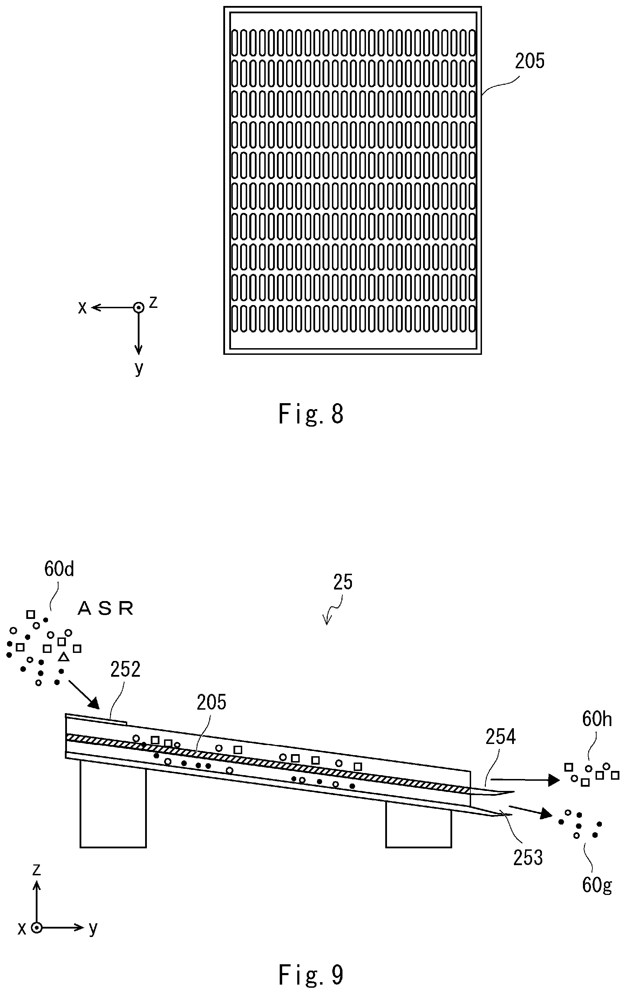

Fig. 8 is a schematic view illustrating an example of the sieve 205. As illustrated in Fig. 8, the sieve 205 has a plurality of slits and has a plate shape. Fig. 9 is a schematic view illustrating a separating machine 25 on which the sieve 205 is mounted. The separating machine 25 vibrates the plate-shaped sieve 205 to sort the ASR 60d fed into the feeding port 252 into the ASR 60g that has passed through the slit and the ASR 60h that has not passed through the slit, and discharges them from discharge ports 253 and 254. The slit of the sieve 205 may be adjusted to have a width that allows the glass to easily pass therethrough and allows components other than the glass to hardly pass therethrough.

Alternatively, the sieve 205 may be configured so that the width of the slit can be changed. In this case, for example, a control apparatus (not illustrated) may analyze the content of glass in the ASR 60g and the content of glass in the ASR 60h, and adjust the width of the slit of the sieve 205 based on the analysis result.

Through the sorting process by the sieve 201 and the sieve 205, most of the glass contained in the ASR 60 collected in the ASR collection system 10 (ideally, all of the glass contained in the ASR 60) is sorted as the ASR 60g. As a result, the sorting apparatus or the like in the subsequent process can be prevented from being damaged or broken by glass.

For example, by vibrating a tray, the dry specific gravity separating machine 206 sorts the ASR 60g, having a particle size less than the second particle size, fed into the tray into an ASR 60i having a low specific gravity and an ASR 60j having a high specific gravity. The ASR 60i having a low specific gravity is glass waste. Glass waste is used, for example, as a raw material for cement or as a fuel for cement production. The ASR 60j having a high specific gravity is, for example, gold and silver dregs.

The magnetic separator 207 removes metal such as iron attracted to the magnet from the ASR 60h having a particle size equal to or larger than the second particle size and less than the first particle size. The aluminum separating machine 208 uses an AC magnetic field generated by rotating the permanent magnet at a high speed to sort the ASR 60h after magnetic separation into aluminum 60k and an ASR 60m other than the aluminum 60k.

The sieve 209 sorts the ASR 60f having a particle size less than the first particle size and having a low glass content into an ASR 60n having a particle size less than the third particle size and an ASR 60p having a particle size equal to or larger than the third particle size. The third particle size is smaller than the first particle size, but the present invention is not limited thereto, and the third particle size may be equal to or larger than the first particle size to such an extent that the event in which the shredded material is clogged in the subsequent process due to too large a third particle size does not occur or the meaning of sorting by the sieve 209 is not lost. The structure of the sieve 209 is similar to the structure of the sieve 205 except that the width of the slit is different.

For example, by vibrating a tray, the dry specific gravity separating machine 210 sorts the ASR 60n having a particle size less than the third particle size fed into the tray into an ASR 60q having a low specific gravity and an ASR 60r having a high specific gravity. The ASR 60q having a low specific gravity is, for example, resin dust (cured plastic). The resin dust contains polypropylene (PP) or polyethylene (PE) as a main component, and is used for pallets, building materials, and the like. The ASR 60r having a high specific gravity is, for example, gold and silver dregs.

The ASR 60m and the ASR 60p are further sorted in the next process in the ASR sorting system 20. Here, the ASR 60m and the ASR 60p can be put together because they have the same size by using the shredding machine 203. That is, in the late process of the ASR sorting system 20, the sorting process of each of the two types of the ASR 60m and the ASR 60p is performed using a common sorting apparatus. This enables cost reduction.

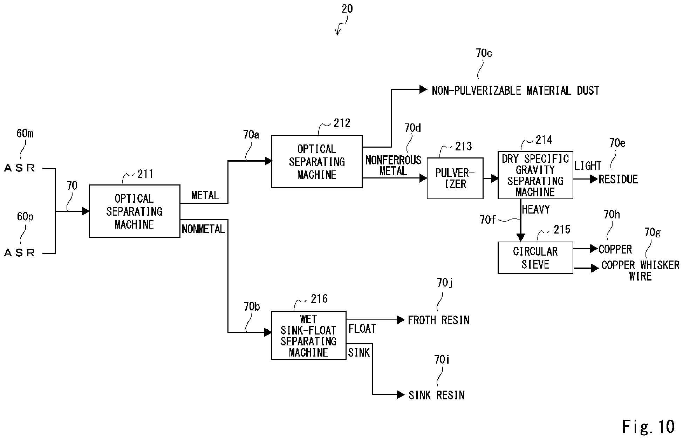

Fig. 10 is a block diagram illustrating a configuration example of the late process of the ASR sorting system 20. As illustrated in Fig. 10, the ASR sorting system 20 includes, for the late process, an optical separating machine 211, an optical separating machine 212, a pulverizer 213, a dry specific gravity separating machine 214, a circular sieve 215, and a wet sink-float separating machine (sink-float separating apparatus) 216.

The optical separating machine 211 sorts an ASR 70, in which the ASR 60m and the ASR 60p are put together, into a metal 70a and a nonmetal 70b.

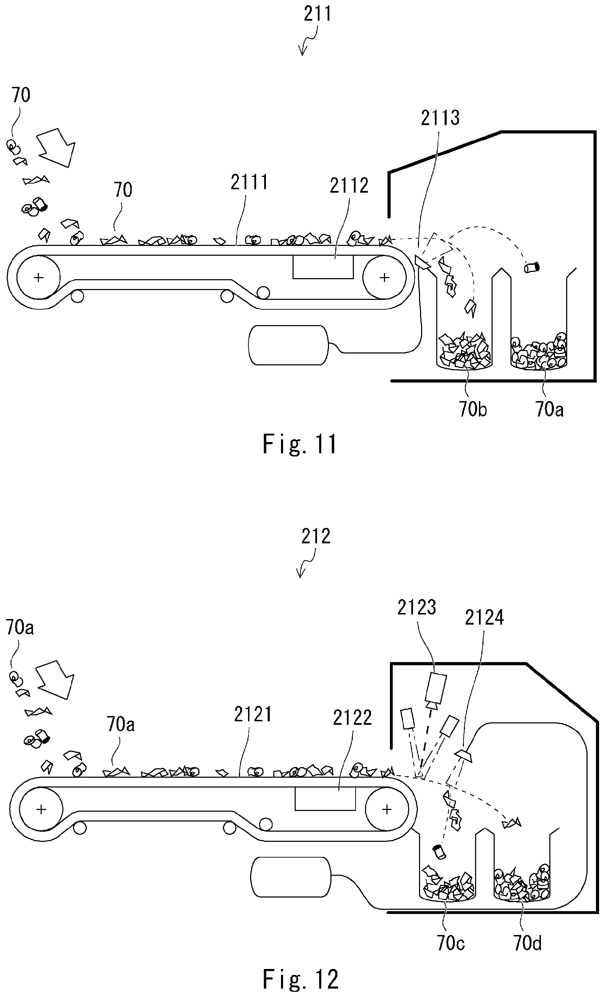

Fig. 11 is a schematic view illustrating an example of the optical separating machine 211. As illustrated in Fig. 11, the optical separating machine 211 determines whether the ASR 70 conveyed to the vicinity of the metal sensor 2112 by the belt conveyor 2111 is metal or nonmetal using the metal sensor 2112. Then, the optical separating machine 211 blows air having a wind force corresponding to the determination result by the metal sensor 2112 to the ASR 70 from an air nozzle 2113. For example, in a case where the ASR 70 is metal, the optical separating machine 211 blows air to the metal ASR 70 from the air nozzle 2113 to blow the ASR 70 away, and in a case where the ASR 70 is nonmetal, the optical separating machine 211 blows no air to the nonmetal ASR 70 from the air nozzle 2113 to drop the ASR 70 to a nearby place. Accordingly, the ASR 70 is sorted into either the metal 70a or the nonmetal 70b.

The optical separating machine 212 sorts the metals 70a sorted by the optical separating machine 211 into a non-pulverizable material dust 70c and a nonferrous metal 70d. The non-pulverizable material dust 70c is solidified and then used as a fuel for an electric furnace or as a reducing agent for a blast furnace. The nonferrous metal 70d is specifically copper.

Fig. 12 is a schematic view illustrating an example of the optical separating machine 212. As illustrated in Fig. 12, the optical separating machine 212 determines whether the metal 70a conveyed to the vicinity of a metal sensor 2112 by a belt conveyor 2121 is the non-pulverizable material dust 70c or the nonferrous metal 70d using a metal sensor 2122. Furthermore, the optical separating machine 212 determines the type of the nonferrous metal 70d based on the color of the metal 70a obtained from the captured image of a camera 2123. For example, when the color of the metal 70a is red, the optical separating machine 212 determines that the metal 70a is copper. Then, the optical separating machine 212 blows air having a wind force corresponding to the determination result by the metal sensor 2122 and the analysis result of the image photographed by the camera 2123 to the metal 70a from an air nozzle 2124. As a result, the metal 70a is sorted into either the non-pulverizable material dust 70c or the nonferrous metal 70d.

The pulverizer 213 pulverizes the nonferrous metal 70d more finely with a cutter or the like attached to the outer periphery of the rotating rotor. Thus, for example, the wire harness contained in the nonferrous metal 70d is separated into the metal (copper) and the covering material. The dry specific gravity separating machine 214 sorts the nonferrous metal 70d pulverized by the pulverizer 213 into a nonferrous metal 70f that is copper having a high specific gravity and a residue 70e having a low specific gravity. The residue 70e is solidified and then used as a fuel for an electric furnace or as a reducing agent for a blast furnace. The circular sieve 215 sorts the nonferrous metal 70f into copper whisker wires 70g and copper 70h.

The wet sink-float separating machine 216 sorts the nonmetal 70b fed into a liquid such as water into a nonmetal 70i sunk in the liquid and a nonmetal 70j floating on the liquid. The nonmetal 70i sunk in the liquid is, for example, a sink resin. The sink resin is used as a fuel for sludge incineration, for example. The nonmetal 70j floating on the liquid is, for example, a froth resin. The froth resin contains PP, PE, or the like as a main component, and is used for pallets, building materials, and the like.

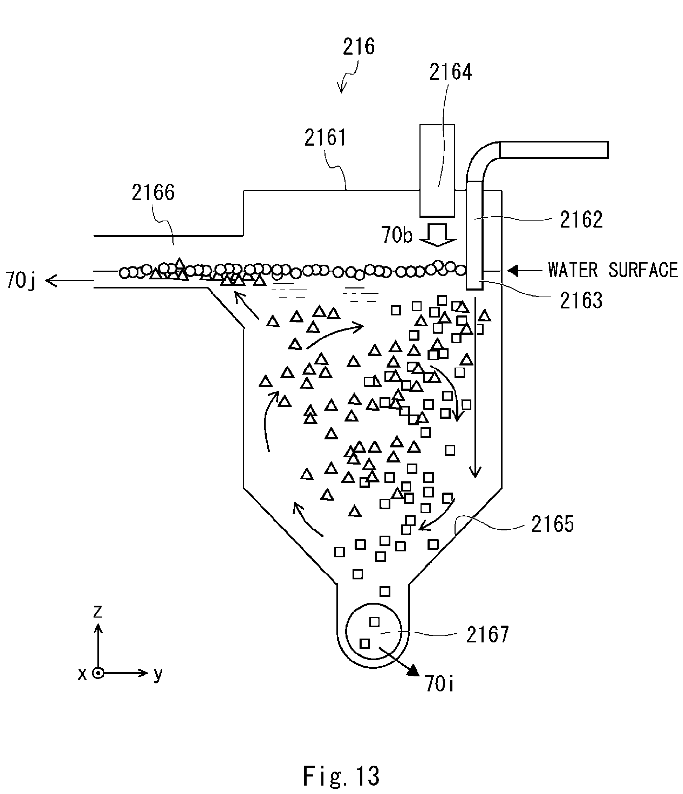

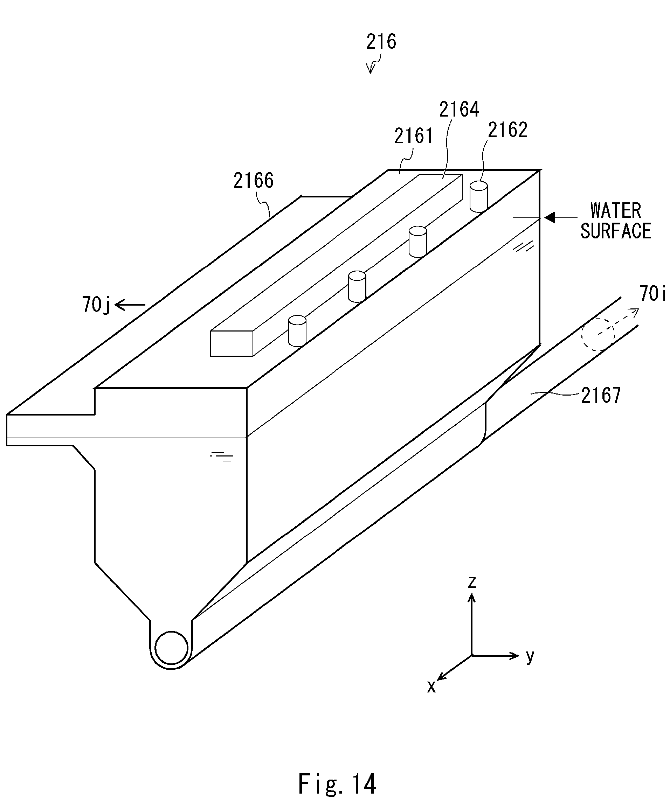

Fig. 13 is a schematic cross-sectional view illustrating an example of the wet sink-float separating machine 216. Fig. 14 is a schematic perspective view illustrating an appearance of the wet sink-float separating machine 216. As illustrated in Figs. 13 and 14, the wet sink-float separating machine 216 includes a water tank 2161 containing water, a water supply pipe 2162, and a feeding port 2164 for the nonmetal 70b.

The water tank 2161 has a body having a rectangular parallelepiped shape, and a bottom having a shape that is thinner toward the tip.

The water supply pipe 2162 is provided so that an ejection port 2163 is located inside (under water) the water stored in the water tank 2161. In the examples of Figs. 13 and 14, the water supply pipe 2162 is provided to extend in the up/down direction (z-axis direction) along the side face of the body of the water tank 2161. Water supply pipe 2162 ejects water from the ejection port 2163.

In the housing of the water tank 2161, a portion 2165 facing the ejection port 2163 of the water supply pipe 2162 has an inclined face, receives the water ejected from the ejection port 2163, and causes the water in the water tank 2161 to have a rising water flow by the force of the received water. That is, the portion 2165 of the housing of the water tank 2161 serves as a guide that causes the water in the water tank 2161 to have a rising water flow using the water ejected from the ejection port 2163. Therefore, in the following description, the portion 2165 of the housing of the water tank 2161 is referred to as a guide 2165. The guide 2165 not only causes the water to have a rising water flow but also serves to prevent the nonmetal 70b from staying in the water.

The body of the water tank 2161 has a first discharge port 2166 at a side face thereof. More specifically, the first discharge port 2166 is provided at a side face located near the water surface in the water tank 2161 in the side face of the body of the water tank 2161. More specifically, part of the opening of the first discharge port 2166 is located below the water surface. As a result, among the nonmetals 70b fed into the water tank 2161 from the feeding port 2164, those floating on the water surface are discharged from the first discharge port 2166 together with water. Water discharged from the first discharge port 2166 is reused as water to be ejected from the water supply pipe 2162.

The water tank 2161 has a second discharge port 2167 at a distal end of the bottom. Among the nonmetals 70b fed into the water tank 2161 from the feeding port 2164, those sinking to the bottom of the water are discharged from the second discharge port 2167.

Among the nonmetals 70b fed into the water tank 2161 from the feeding port 2164, the wet sink-float separating machine 216 discharges, from the first discharge port 2166, as the nonmetal 70j, the nonmetal having a specific gravity lower than that of water and the nonmetal floating on the water surface by riding on the rising water flow, and discharges, from the second discharge port 2167, as the nonmetal 70i, the nonmetal sinking to the bottom of the water due to a heavy weight without riding on the rising water flow.

The wet sink-float separating machine 216 illustrated in Figs. 13 and 14 can adjust the flotation and sedimentation of a predetermined shredded material by the water flow, and it is not necessary to adjust the flotation and sedimentation using saline or the like, so that corrosion of the apparatus can be prevented. In addition, since the wet sink-float separating machine 216 can perform the wet sink-float separation for the nonmetal 70b with little power consumption, an increase in cost can be suppressed. Furthermore, since the wet sink-float separating machine 216 does not require a large-scale stirrer, downsizing can be realized.

Note that the ASR sorting system 20 may further include a control apparatus (not illustrated) that controls the wet sink-float separating machine 216. For example, the control apparatus analyzes the component of the nonmetal 70j discharged from the first discharge port 2166 and the component of the nonmetal 70i discharged from the second discharge port 2167, and adjusts the ejection amount per unit time of the water ejected from the ejection port 2163 of the water supply pipe 2162 based on the analysis result. Thereby, the wet sink-float separating machine 216 can adjust the component of the nonmetal 70j discharged from the first discharge port 2166 and the component of the nonmetal 70i discharged from the second discharge port 2167.

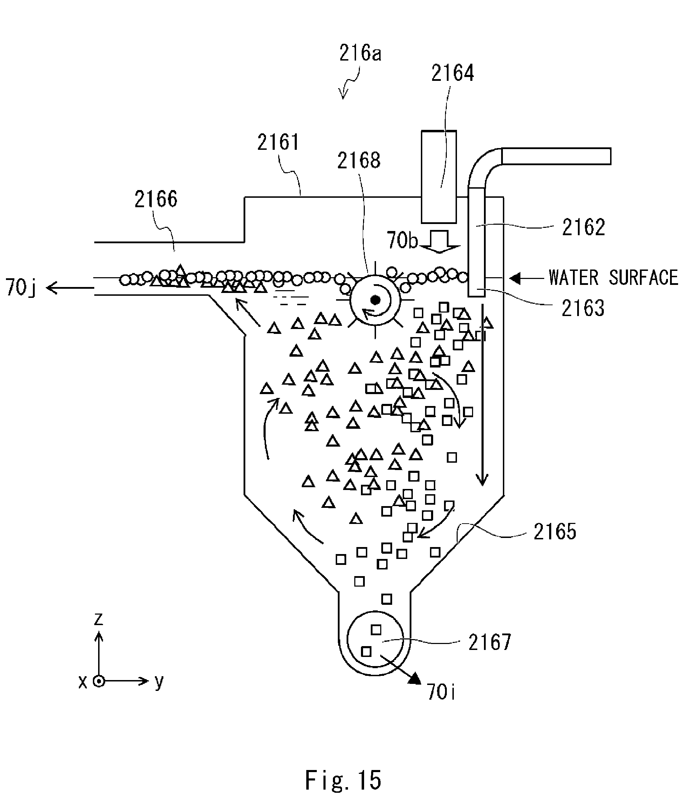

Fig. 15 is a schematic sectional view illustrating a first modified example of the wet sink-float separating machine 216 as a wet sink-float separating machine 216a. The wet sink-float separating machine 216a further includes a stirring waterwheel 2168, unlike the wet sink-float separating machine 216.

The stirring waterwheel 2168 is provided in the vicinity of the water surface. In the example of Fig. 15, the stirring waterwheel 2168 is provided so that a rotation axis extending in the horizontal direction (x-axis direction) is located below the water surface, and part of the outer periphery is in contact with the water surface. The stirring waterwheel 2168 rotates to stir the water surface of the water tank 2161. For example, the stirring waterwheel 2168 rotates so as to stir the water surface in a direction away from the first discharge port 2166. In the example of Fig. 15, the stirring waterwheel 2168 rotates to the right when viewed in the negative x-axis direction. Thereby, for example, air bubbles attached to the shredded material (nonmetal 70b) are removed, and the shredded material having a low specific gravity attached to the shredded material having a high specific gravity is separated. As a result, the shredded material that is not supposed to float sinks as intended, and the shredded material that is not supposed to sink floats as intended. Accordingly, the wet sink-float separating machine 216a can perform the sink-float separation more accurately.

Note that the ASR sorting system 20 may further include a control apparatus (not illustrated) that controls the wet sink-float separating machine 216a. For example, the control apparatus analyzes the component of the nonmetal 70j discharged from the first discharge port 2166 and the component of the nonmetal 70i discharged from the second discharge port 2167, and adjusts the ejection amount per unit time of the water ejected from the ejection port 2163 of the water supply pipe 2162 based on the analysis result. Alternatively, the control apparatus may adjust the amount of rotation of the stirring waterwheel 2168 based on the analysis result. Thereby, the wet sink-float separating machine 216a can adjust the component of the nonmetal 70j discharged from the first discharge port 2166 and the component of the nonmetal 70i discharged from the second discharge port 2167.

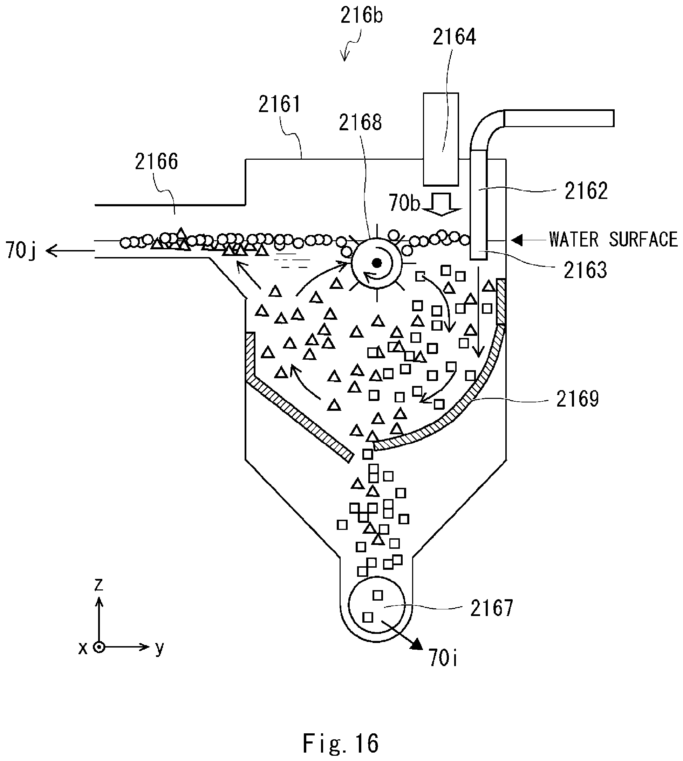

Fig. 16 is a schematic sectional view illustrating a second modified example of the wet sink-float separating machine 216 as a wet sink-float separating machine 216b. The wet sink-float separating machine 216b further includes a guide 2169, unlike the wet sink-float separating machine 216a. That is, instead of using part of the housing of the water tank 2161 as a guide, the wet sink-float separating machine 216b uses the guide 2169 that is an accessory.

The guide 2169 is provided below the ejection port 2163 of the water supply pipe 2162 in the water tank 2161. The guide 2169 receives the water ejected from the ejection port 2163 of the water supply pipe 2162, and causes the water in the water tank to have a rising water flow by the force of the received water. For example, the guide 2169 has a downward protruding arc shape so as to receive the water ejected from the ejection port 2163 of the water supply pipe 2162 at one end and raise the water at the other end.

The wet sink-float separating machine 216b can exhibit an effect equivalent to that of the wet sink-float separating machine 216a.

The ASR sorting system 20 may further include a control apparatus (not illustrated) that controls the wet sink-float separating machine 216b. For example, the control apparatus analyzes the component of the nonmetal 70j discharged from the first discharge port 2166 and the component of the nonmetal 70i discharged from the second discharge port 2167, and adjusts the ejection amount per unit time of the water ejected from the ejection port 2163 of the water supply pipe 2162 based on the analysis result. Alternatively, the control apparatus may adjust the amount of rotation of the stirring waterwheel 2168 based on the analysis result. Alternatively, the control apparatus may adjust the angle of the guide 2169 based on the analysis result. Thereby, the wet sink-float separating machine 216b can adjust the component of the nonmetal 70j discharged from the first discharge port 2166 and the component of the nonmetal 70i discharged from the second discharge port 2167.

As described above, in the sorting system according to the present disclosure, the ASR collection system 10 can improve the collection ratio of organic components contained in the ASR by further collecting, using the blower and the second suction apparatus, organic components such as cured plastic that cannot be collected only by the first suction apparatus. That is, the ASR collection system 10 can accurately sort and collect the shredded material generated by shredding the vehicle.

In the sorting system according to the present disclosure, the ASR sorting system 20 can finely sort and collect the ASR collected from the shredded material generated by shredding the vehicle. Here, the ASR sorting system 20 can prevent failure of the sorting apparatus due to glass by performing a sorting process on the ASR collected from the shredded material after removing the glass using a sieve. In addition, the ASR sorting system 20 can perform a sorting process for each of the two types of ASRs using a common sorting apparatus by shredding an ASR having a large particle size of the ASRs sorted into the two types of particle sizes. As a result, an increase in cost is suppressed. In addition, the ASR sorting system 20 collects the cured plastic by performing a dry specific gravity separation on the ASR from which the glass has been collected. That is, the ASR sorting system 20 can finely sort and collect the ASR.

Further, in the ASR sorting system 20, the wet sink-float separating machine 216 can adjust the flotation and sedimentation of a predetermined shredded material by the water flow, and it is not necessary to adjust the flotation and sedimentation by using saline or the like, so that corrosion of the apparatus can be prevented. In addition, since the wet sink-float separating machine 216 can perform the wet sink-float separation for the ASR with little power consumption, an increase in cost can be suppressed. Furthermore, since the wet sink-float separating machine 216 does not require a large-scale stirrer, downsizing can be realized.

The present disclosure can be realized by causing a central processing unit (CPU) to execute a computer program for part or all of the process of the sorting system.

The above-described program includes a group of instructions (or software codes) for causing a computer to execute one or more functions described in the embodiments when read by the computer. The program may be stored in a non-transitory computer-readable medium or a tangible storage medium. By way of example, and not limitation, computer-readable media or tangible storage media include a random-access memory (RAM), a read-only memory (ROM), a flash memory, a solid-state drive (SSD) or other memory techniques, a CD-ROM, a digital versatile disc (DVD), a Blu-ray (registered trademark) disc or another optical disc storage, a magnetic cassette, a magnetic tape, a magnetic disc storage, or other magnetic storage devices. The program may be transmitted on a transitory computer-readable medium or a communication medium. By way of example, and not limitation, transitory computer-readable or communication media include electrical, optical, acoustic, or other forms of propagated signals.

Although the present disclosure is described with reference to the embodiments, the present disclosure is not limited to the embodiments described above. Various modifications that can be understood by those skilled in the art can be made to the configuration and details of the present disclosure within the scope of the present disclosure. Each embodiment can be appropriately combined with another embodiment.

The present application claims priority based on Japanese Patent Application No. 2023-146507 filed on September 8, 2023, the entire disclosure of which is incorporated herein.

### Reference Signs List

- 10: ASR COLLECTION SYSTEM
- 15: CONTROL APPARATUS
- 20: ASR SORTING SYSTEM
- 25: SEPARATING MACHINE
- 50: SHREDDED MATERIAL
- 60: ASR
- 70: ASR
- 101: BELT CONVEYOR
- 102: FEEDING PORT
- 103: UPPER FEED ROLLER
- 104: LOWER FEED ROLLER
- 105: SHREDDING CHAMBER
- 106: HAMMER
- 107: SIEVE
- 108: SIEVE
- 109: FIRST SUCTION APPARATUS
- 110: SUCTION PORT
- 111: TRAY
- 112: BELT CONVEYOR
- 113: SORTING CHAMBER
- 114: FEEDING PORT
- 115: DISCHARGE PORT
- 116: DISCHARGE PORT (SUCTION PORT OF SECOND SUCTION APPARATUS)
- 117: BLOWER
- 118: SECOND SUCTION APPARATUS
- 151: DRIVE UNIT
- 152: ANALYSIS UNIT
- 153: SUCTION FORCE ADJUSTMENT UNIT
- 154: WIND FORCE ADJUSTMENT UNIT
- 201: SIEVE
- 202: WIND FORCE SEPARATING MACHINE
- 203: SHREDDING MACHINE
- 204: WIND FORCE SEPARATING MACHINE
- 205: SIEVE
- 206: DRY SPECIFIC GRAVITY SEPARATING MACHINE
- 207: MAGNETIC SEPARATOR
- 208: ALUMINUM SEPARATING MACHINE
- 209: SIEVE
- 210: DRY SPECIFIC GRAVITY SEPARATING MACHINE
- 211: OPTICAL SEPARATING MACHINE
- 212: OPTICAL SEPARATING MACHINE
- 213: PULVERIZER
- 214: DRY SPECIFIC GRAVITY SEPARATING MACHINE
- 215: CIRCULAR SIEVE
- 216: WET SINK-FLOAT SEPARATING MACHINE
- 252: FEEDING PORT
- 253: DISCHARGE PORT
- 254: DISCHARGE PORT
- 2011: MEMBER
- 2012: FEEDING PORT
- 2013: DISCHARGE PORT
- 2111: BELT CONVEYOR
- 2112: METAL SENSOR
- 2113: AIR NOZZLE
- 2121: BELT CONVEYOR
- 2122: METAL SENSOR
- 2123: CAMERA
- 2124: AIR NOZZLE
- 2161: WATER TANK
- 2162: WATER SUPPLY PIPE
- 2163: EJECTION PORT
- 2164: FEEDING PORT
- 2165: GUIDE
- 2166: FIRST DISCHARGE PORT
- 2167: SECOND DISCHARGE PORT
- 2168: STIRRING WATERWHEEL
- 2169: GUIDE

## Claims

1. A sorting system configured to sort an automobile shredder residue (ASR) collected from a shredded material generated by shredding a vehicle, the sorting system comprising:
a first sieve configured to sort the ASR into a first ASR that is the ASR having a particle size less than a first particle size and a second ASR that is the ASR having a particle size equal to or larger than the first particle size;
a first dry specific gravity separating apparatus configured to perform a dry specific gravity separation on the first ASR to collect glass; and
a sorting apparatus configured to sort the first ASR from which the glass has been collected and the second ASR into at least metal and an organic component.

2. The sorting system according to claim 1, wherein the first sieve has a plurality of slits.

3. The sorting system according to claim 2, wherein a width of the slit of the first sieve is 10 mm or less.

4. The sorting system according to claim 1, further comprising a second sieve configured to sort the first ASRs into two types of particle sizes,
wherein the first dry specific gravity separating apparatus performs a dry specific gravity separation on a first ASR having a small particle size of the first ASRs having the two types of particle sizes, the first ASRs being sorted by the second sieve.

5. A sorting method executed by a sorting system configured to sort an automobile shredder residue (ASR) collected from a shredded material generated by shredding a vehicle, the sorting method comprising:
sorting, using a first sieve, the ASR into a first ASR that is the ASR having a particle size less than a first particle size, and a second ASR that is the ASR having a particle size equal to or larger than the first particle size;
performing a dry specific gravity separation on the first ASR to collect glass; and
sorting the first ASR from which the glass has been collected and the second ASR into at least metal and an organic component.

6. A control program for causing a computer to execute a sorting process in a sorting system configured to sort an automobile shredder residue (ASR) collected from a shredded material generated by shredding a vehicle, the control program causing the computer to execute the steps of:
sorting, using a first sieve, the ASR into a first ASR that is the ASR having a particle size less than a first particle size, and a second ASR that is the ASR having a particle size equal to or larger than the first particle size;
performing a dry specific gravity separation on the first ASR to collect glass; and
sorting the first ASR from which the glass has been collected and the second ASR into at least metal and an organic component.
